# EUROPEAN PATENT APPLICATION

(11) **EP 4 431 380 A1**
(43) Date of publication of application: **18.09.2024**
(21) Application number: 23162599.7
(22) Date of filing: 17.03.2023
(51) Int. Cl.: B63H 9/061, B63H 9/10

(54) **AUTOMATIC REEFING**

(71) Applicant: AlfaWall Oceanbird AB, 147 80 Tumba (SE)
(72) Inventor: ROOS, Fredrik, SE-141 71 SEGELTORP (SE); HILLENBRAND, Antonia, SE-114 20 STOCKHOLM (SE)
(74) Representative: Alfa Laval Attorneys

(57) **Abstract**

The present disclosure relates to a method of a device (150) and a device of controlling reefing of a wind engagement unit (101) of a wind propulsion arrangement (100) of a vessel (1), the wind propulsion arrangement (100) comprising:
- the wind engagement unit comprising at least one movable portion (120), and
- a base (20) connected to the wind engagement unit (101) and to a body of the marine vessel, and wherein
the method comprises:
determining (S101) wind speed (TWS; AWS) that is experienced by the wind engagement unit (101),
determining (S102) whether or not the wind speed (WS; TWS; AWS) exceeds one or more threshold values (T) determined for the wind engagement unit (101); and if so:
controlling (S103, S101) the at least one movable portion (120) of the wind engagement unit (101) to be displaced in relation to the base.

## Description

### TECHNICAL FIELD

The present disclosure relates to a method of a device of controlling reefing of a wind engagement unit configured for propulsion of a vessel, and a controller device performing the method. The present disclosure further relates to a computer program comprising computer-executable instructions for causing a device to perform steps of the method when the computer-executable instructions are executed on a processing unit included in the device. Further, the present disclosure relates to a computer program product comprising a computer readable medium, the computer readable medium having the computer program embodied thereon.

### BACKGROUND

Wind propulsion of marine vessel by the use of wind engagement units configured for providing propulsive forces and being in the form of sails have been known for a long time as means of propulsion of vessels such as ships. Traditionally, flexible sails have been mounted on masts to harness the power of wind and propel the ship. Modern merchant vessels commonly use fossil fuels and combustion engines to propel the vessel.

Use of wind propulsion has been suggested to reduce the overall consumption of fossil fuels. For this purpose, rigid sails can be used. The amount of power being generated is related to a large number of interlinked factors, but wind engagement area of wind engagement units configured for propulsion and other geometric and aerodynamic characteristics are primary performance indicators.

Wind engagement units for a vessel may be designed in numerous different ways, but common for most of them is that it must be possible to reduce the wind engagement area, i.e. it must be possible to reef the wind engagement unit when wind speed becomes too high. This can either be to keep the structural integrity of the sail itself and/or to maintain the operational safety of the ship. That is, it must be possible to avoid too large heel angles, and it must be possible to keep manoeuvrability of the vessel, for example.

Reefing is a challenge when large wind engagement units are used. Therefore, the units need to be designed so that varying wind speeds are accounted for. In order to improve safety of wind-propelled vessels, safety reefing systems which can respond to varying weather conditions in a secure manner, are desirable.

### SUMMARY

The development in the industry is going towards fully automated sail systems. To ensure safety of the marine vessels, automated sail systems would need an automated reefing function. One objective of the present disclosure is to solve, or at least mitigate, this problem in the art and to provide an improved method of controlling reefing of a wind engagement unit of a vessel.

According to the present disclosure, the above-stated problem is solved by a method of a device of controlling reefing of a wind engagement unit of a wind propulsion arrangement of a vessel, the wind propulsion arrangement comprising the wind engagement unit comprising at least one movable portion, and a base connected to the wind engagement unit and to a body of the marine vessel, and wherein the method comprises: determining wind speed that is experienced by the wind engagement unit, determining whether or not the wind speed exceeds one or more threshold values determined for the wind engagement unit, and if so, controlling the at least one movable portion of the wind engagement unit to be displaced in relation to the base. When reefing by displacing at least one movable portion of the wind engagement unit in relation to the bas, the loads on the wind engagement unit and on the base can be reduced.

The first step of determining additionally comprises determining force and/or torque acting on the wind engagement unit, and the second step of determining additionally comprises determining whether or not the force and/or torque exceeds one or more threshold values determined for the wind engagement unit and if so, performing the controlling step.

The wind engagement unit may comprise a main wingsail and a flap, which is rotatable around a first longitudinal axis of rotation. The method step of controlling of the at least one movable portion of the wind engagement unit may then comprise controlling the flap to rotate around the first longitudinal axis of the wind engagement unit. In this way, the area of the wingsail unit facing the wind can be effectively reduced.

The controlling of the flap may comprise in a first step causing the flap to rotate around the first longitudinal axis towards the main wingsail to a folded position. The controlling of the at least one movable portion of the wind engagement unit to be displaced comprises in a second step causing the wind engagement unit to pivot around a horizontal axis of rotation in respect of the base towards the body of the marine vessel to a tilted position. The first step may be based on a first threshold and/or point in time, and the second step may be based on a second threshold and/or point in time. The first threshold in windspeed and/or force and/or torque may be lower than the second threshold in windspeed and/or force and/or torque.

The determining of the threshold value may be based on a determined apparent wind speed and may comprise filtering the measured and/or calculated apparent wind speed with one or more of: time constants, filter algorithms and/or weighing the wind speed from wind data from more than one different position of the wind engagement unit.

The determining of the threshold value may be based on a measured true wind speed, and/or calculation based on the true wind speed and at least one of: vessel speed, speed increase, maximum vessel speed, maximum vessel speed when the vessel is turned straight into the wind and true wind angle range.

The controlling of the at least one movable portion of the wind engagement unit may be performed only if it is determined that a true wind angle of the wind engagement unit is within a pre-determined range.

The method may further comprise alerting an operator of the vessel that the wind speed exceeds the threshold value.

The present disclosure also relates to a computer program comprising computer-executable instructions for causing a device to perform steps as described above when the computer-executable instructions are executed on a processing unit included in the device.

The present disclosure also relates to a computer program product comprising a computer readable medium, the computer readable medium having the computer program described above embodied thereon.

The present disclosure also relates to a controller device configured to control reefing of a wind engagement unit of a wind propulsion arrangement of a vessel, the wind propulsion arrangement comprising: the wind engagement unit comprising at least one movable portion, and a base connected to the wind engagement unit and to a body of the marine vessel. The controller device comprises a processing unit and a memory, said memory containing instructions executable by said processing unit. The controller device is operative to acquire wind speed data from the wind propulsion arrangement associated with the wind speed that is experienced by the wind engagement unit and determine, based on the acquired wind speed data, whether or not the wind speed exceeds one or more threshold values (T) determined for the wind engagement unit (101); and if so, control the at least one movable portion of the wind engagement unit to be displaced in relation to the base.

The wind engagement unit may comprise a main wingsail and a flap, which is rotatable around a first longitudinal axis of rotation. The controller device may be then further operative to control the flap to rotate around the first longitudinal axis of the wind engagement unit.

The controller device may be further operative to control the flap in a first step to rotate around the first longitudinal axis towards the main wingsail to a folded position and/or in a second step to pivot around a horizontal axis of rotation in respect of the base towards the body of the marine vessel to a tilted position. The first step may be based on a first threshold and/or point in time, and the second step may be based on a second threshold and/or point in time, and wherein the first threshold in windspeed and/or force and/or torque may be lower than the second threshold in windspeed and/or force and/or torque.

The controller device may be operative to determine the threshold value based on a determined apparent wind speed and filter the measured and/or calculated apparent wind speed with one or more of: time constants, filter algorithms and/or weighing the wind speed from wind data from more than one different position of the wind engagement unit.

The controller device may be operative to determine the threshold value based on a measured true wind speed, and/or calculation based on the true wind speed and at least one of: vessel speed, speed increase, maximum vessel speed, maximum vessel speed when the vessel is turned straight into the wind and true wind angle range, and to control the at least one movable portion of the wind engagement unit only if it is determined that a true wind angle of the wind engagement unit is within a pre-determined range.

The controller device may be operative to alert an operator of the vessel that the wind speed exceeds the threshold value. Thus, a crew in a vessel can be alerted to be aware of automatic reefing.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig. 1 illustrates a marine vessel in which embodiments may be implemented;
Fig. 2 illustrates a wind engagement unit in accordance with an embodiment;
Fig. 3 shows a wind engagement unit of Fig. 2 in a folded position in a view from above;
Fig. 4 illustrates tilted wind engagement unit of a vessel according to an embodiment;
Fig. 5 shows a flowchart illustrating a method of controlling reefing of a wind engagement unit of a vessel according to an embodiment;
Fig. 6 shows a flowchart illustrating a method of controlling reefing of a wind engagement unit of a vessel according to another embodiment;
Fig. 7 shows a flowchart illustrating a method of controlling reefing of a wind engagement unit of a vessel according to still an embodiment;
Fig. 8 shows reefing of a wind engagement unit according to a further embodiment; and
Fig. 9 illustrates a device configured to perform reefing of a wind engagement unit according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

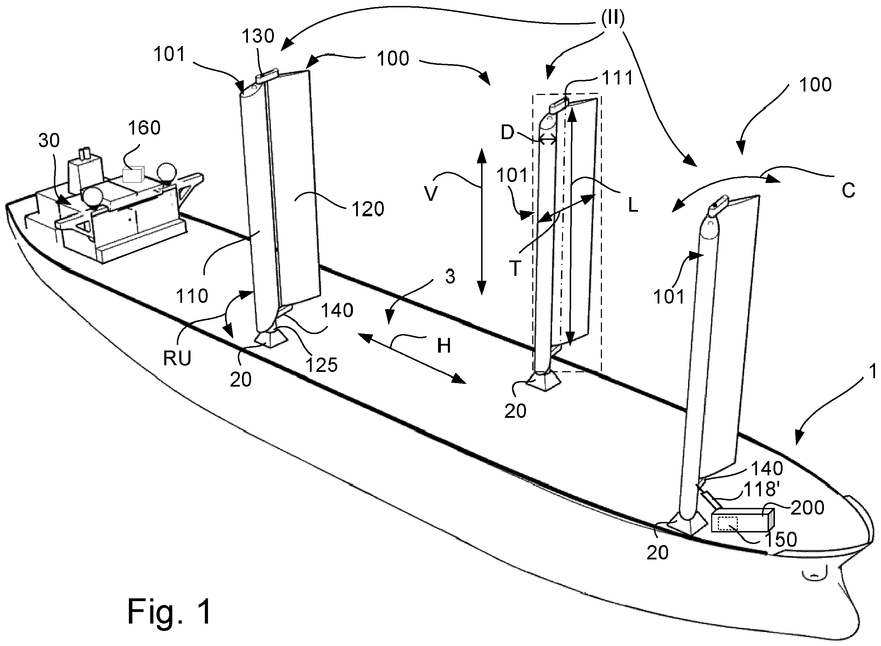

Fig. 1 illustrates a marine vessel 1 in which embodiments may be implemented. The vessel 1 comprises in this embodiment three wind-assisted propulsion arrangements 100 each comprising a wind engagement unit 101 and a base 20 connected with the wind engagement unit 101. The base may be directly or indirectly fixed to a body 3 of the vessel, i.e. the base may be directly connected e.g. to the deck of the vessel or there may be an intermediate structure between the wind engagement unit and the deck of the vessel. In the shown embodiment, the wind engagement unit is in a form of wingsail arrangement. Each of the wind engagement units 101 comprises a main wingsail 110 and an aft flap 120. The aft flap may have a different size than the main wingsail, and in the illustrated example it is smaller than the main wingsail. The wind engagement unit 101 is depicted by a dotted-line rectangle in connection with the middle wind propulsion arrangement 100. In the shown embodiment, two coupling members, an upper coupling member 130 and lower coupling member 140, are used to connect the main wingsail no and the aft flap 120.

While the vessel 1 of Fig. 1 comprises three wingsail arrangements 101, it would typically be possible to operate the vessel 1 with a single or multiple wingsail arrangements, such as from 2 to 8, but not limited thereto. The number of wingsail arrangements is suitably adapted to the size and type of the vessel. Both the main wingsail 110 and a flap 120 in the shown example are rigid or semi-rigid, meaning that there is a certain degree of flexibility.

Each wind propulsion arrangement 100 comprises a base 20 which can be fixed directly or indirectly to a deck 3, i.e. the body of the vessel 1. The body of the vessel may thus comprise a structure, which is fixed to the deck or is part of the deck. The wind engagement unit 101 is rotatably connected via a longitudinal unit axis of rotation 125 to the base 20, which allows rotation of the whole wind engagement unit 101 in respect to the base 20, as illustrated with a double-arrow RU at the left-most wind propulsion arrangement 101. In this way the wind engagement unit 101 can be directed towards the wind in a suitable manner.

In Fig. 1, the wind engagement unit 101 is shown in a standing position, in which the main wingsail no and the flap 120 are inclined in respect to each other to form a camber C, as indicated in connection with the rightmost wind propulsion arrangement 100. In a propulsive position, the wind engagement unit has a certain wind engagement area, provided by the surface of the main wingsail no and the flap 120. By the wind engagement area is meant area of the wingsails in the wind engagement unit that engage the wind in a manner to provide propulsive forces to the vessel and which is thus exposed to wind loads. By changing the angle of the flap 120 with respect to the main wingsail 110 and by turning the wind engagement unit 101 around the unit axis of rotation 125 in respect to the base, the entire wind engagement unit may be adjusted to all possible angles of incoming wind. Thus, the whole wind engagement unit can be turned towards the wind in a propulsive position, for example so that the concave surface of the camber faces the wind or so that the main wing and the flap are aligned.

Generally, when the wind speed becomes stronger than a threshold, reefing of the wind engagement unit may be required. By reefing is meant reduction of the wind engagement area or the projected area towards the incoming wind. When the projected area towards the wind is adjusted and reduced, the wind loads on the wind engagement unit are decreased. When reefing, at least one movable portion of the wind engagement unit is displaced in relation to the base in order to reduce the loads on the wind engagement unit and on the base.

According to an embodiment, the flap 120 is displaced in relation to the base, and the flap is comprised in the at least one movable portion of the wind engagement unit 101. Fig. 1 shows in connection with the middle wind engagement unit 100 an example of the flap 120 being arranged to rotate around a first longitudinal axis 111 of rotation. The flap 120 may be arranged to rotate both clockwise and counter clockwise around the first longitudinal axis 111 of rotation.

Generally, and with reference to Fig. 1, the wind engagement unit may be provided to a propulsive position, neutral position and folded position. When in a standing, vertical (V) position, the whole wind engagement unit 101 can be rotated around the longitudinal unit axis of rotation 125 to adjust the position in respect of the surrounding wind. The different positions can be provided by rotating the flap to the propulsive position, in which the camber C is provided, to the neutral position, in which the main wingsail and the flap are successively aligned with each other, and to the folded position, in which the flap is brought towards the main wingsail so that the flap overlaps the main wingsail in a projected sideview. In the folded position, the transversal extension T of the wind engagement unit is shorter than in the propulsive or neutral position.

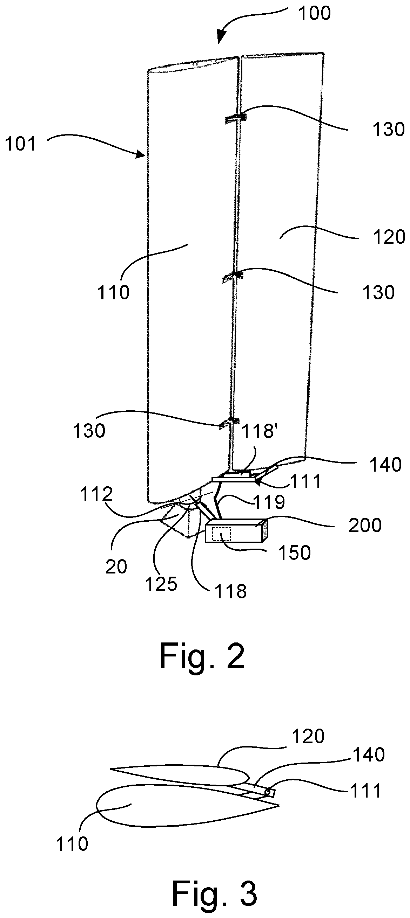

With reference to Fig. 2, another embodiment of a wind propulsion arrangement 100 with a wind engagement unit 101 is shown in a propulsive standing position. In this embodiment, the flap 120 is rotatable around a first longitudinal axis of rotation 111, which is located outside the peripheries of the main wingsail no and the flap 120. The first axis of rotation 111 is provided in a lower coupling member 140, which is connected to the main wingsail no and the flap 120. When rotating the flap 120 around the first axis of rotation to an inclined position with respect to the main wingsail 110, the flap is displaced in relation to the base 20, which is fixed to the body of the vessel. The wind engagement unit comprises in this embodiment several upper coupling members 130 along the height, i.e. longitudinal extension, of the main wingsail no and the flap 120.

Fig. 3 shows the wingsail unit 101 in a folded position in a simplified view from above. When the flap is folded towards the main wingsail 110 the flap 120 overlaps with the main wingsail no in a projected view. In the folded position, a side wall of the flap 120 faces a sidewall of the main wingsail 110.

Each of the main wingsail no and the flap 120 has a so-called airfoil shape, which implies a wing profile having an aerodynamic shape when looked in a cross-sectional view in the fore-to-aft direction, i.e. from a leading edge to a trailing edge direction. The aerodynamic airfoil shape is advantageous, since a larger force for a larger range of inflow angles can be generated. The shape may be asymmetric in said direction, but it can involve symmetric portions, or the shape may be a symmetric airfoil. The airfoil shape may be for example defined according to NACA standardized series, but the shape is not limited thereto.

In a scenario where the wingsail arrangements 100 are subjected to strong winds, safety of the vessel 1 may be jeopardized. The main problems with large propulsive forces are that the wind engagement unit 101 may not withstand large forces and moments generated by high wind speeds. Additionally, side forces generated by the wind engagement unit may lead to large heel angles and destabilize the vessel. It is thus important to be able to decrease loads on the wind engagement unit and destabilizing forces for the vessel.

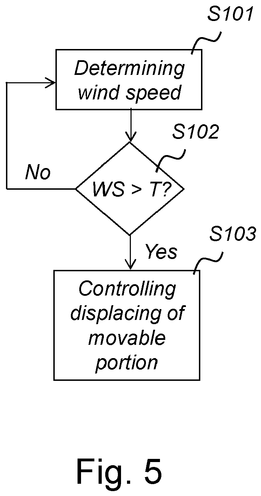

With further reference to Fig. 2, a device 150 for controlling reefing of the wind engagement unit 101 is shown. The device may use a method for reefing as further illustrated in Fig. 5, in accordance with an embodiment. The device 150 is configured to control displacement means 200, which may be for example hydraulic means and/or electrical means. As shown in Fig. 2, the device 150 may be arranged in proximity of the wind propulsion arrangement 100, in this case housed inside the hydraulic power unit of the displacement means 200, but may alternatively be arranged anywhere onboard the vessel, such as at a central supervising entity of the vessel.

The displacement means 200 may displace a portion of the wind engagement unit 101, for example the flap 120 and/or the whole wind engagement unit 101. The displacement means 200 maybe arranged to tilt the whole wind engagement unit 101 horizontally around a horizontal tilting axis 112 of rotation in respect of the base 20.

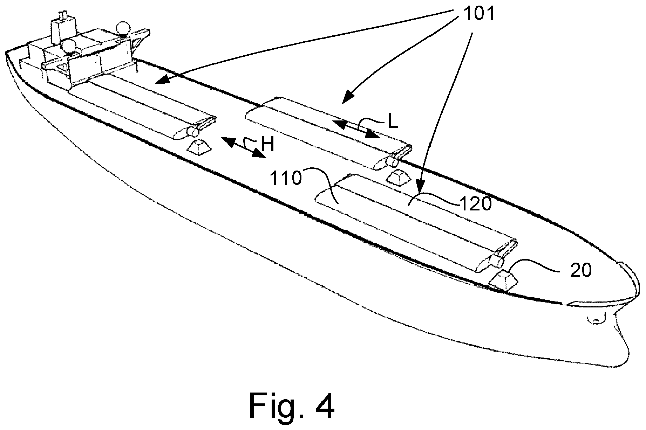

With reference to Fig. 1 and 2, the wind propulsion arrangement 100 may according to an embodiment comprise at least one hydraulic actuator 118 arranged to engage with the at least one movable portion for displacement thereof in relation to the base 10. In Fig. 1 one actuator 118' is shown connected to the lower coupling member 140 of the wind engagement unit for the rotation of the flap 120. In Fig. 2 shown embodiment, one hydraulic actuator 118 is connected to the lower coupling member 140, which comprises the first axis of rotation for rotating the flap 120. A second hydraulic actuator 118' is connected to a shaft between the base and the wind engagement unit, which shaft provides a second horizontal axis 112 of rotation for tilting the wind engagement unit 101 towards the body of the vessel to a tilted position, which is shown in Fig 4. The hydraulic actuators 118, 118' are connected to a hydraulic power unit of the displacement means 200 arranged for supplying hydraulic power via hydraulic conduits 119 to the hydraulic actuators 118, 118'. The hydraulic actuators 118. 118' are arranged to engage with the at least one movable portion for displacement thereof in relation to the base. The movable portion may be the flap 120 or the whole wind engagement unit 101. The base 20 is fixed to the body of the vessel 3 either directly or indirectly via a structure, which in turn is fixed to the body 3. When the flap 120 rotates in respect to the main wingsail, it also rotates in respect to the base 20.

Fig. 4 shows the wind engagement unit 101 in a tilted position. When tilted, the wind engagement unit is completely reefed and is in a non-propulsive position. In the shown tilted position, the flap 120 is folded towards the main wingsail 110 as shown in Fig. 3 so that space on the deck of the vessel can be saved. In the tilted position, the longitudinal axis L of the wind engagement unit extends substantially parallelly or nearly parallelly with the deck, which extends in the horizontal direction H in respect of the deck of the vessel 1, as indicated in Fig 4. The wind engagement unit 101 is suitably physically connected to the base 20 in the tilted position, e.g. via the actuators 118. 118' and the hydraulic power unit 200, but for the illustration reasons the base 20 has been separated from the wind engagement unit 101 in Fig. 4.

Fig. 5 shows a flowchart illustrating a method of controlling reefing of a wind engagement unit of a vessel according to an embodiment. In this example wind propulsion arrangement 100 may be configured as comprising the wind engagement unit 101 and the base 20 as described above in connection with Fig. 1-4.

Typically, the device 150 is embodied in the form of one or more microprocessors or similar devices having data computation capability.

Further shown in Fig. 1 is a wind speed detector 160 arranged at the roof the central supervising entity of the vessel 1 for measuring the speed of the wind that the wind propulsion arrangement 101 is subjected to. There may be several wind speed detectors on the vessel, and they may be located at different locations of the vessel. The wind speed detector is connected to the control device 150, suitably via a wired connection but in some cases via a wireless connection.

Returning to Fig. 5, in a first step S101, the device 150 determines the wind speed (WS) that the wind propulsion arrangement 101 is subjected to. In this embodiment, the device 150 is in communicative connection with the wind speed detector 160 which measures the wind speed and supplies the measured wind speed values to the device 150, which is configured to receive the values.

In step S102, the device 150 determines whether or not the measured wind speed exceeds a threshold value T, i.e. WS > T, where the threshold value is set such that if the measured wind speed exceeds the threshold value T, the wind speed is considered too high and the wind engagement area of the wind engagement unit 101 should be decreased, and it should thus be reefed. In this example, it is assumed that WS > T.

To achieve reefing, the device 150 controls the at least one movable portion of the wind engagement unit 101 to be displaced in relation to the base in step S103 in order to reduce loads on the wind engagement unit 101.

In an embodiment, the movable portion is the flap 120, and the device 150 controls the flap 120 to rotate around the first longitudinal axis 111 of the wind engagement unit 101. The flap may be rotated to a neutral position in which the flap is aligned with the main wingsail. The whole wind engagement unit 101 can be rotated to an angle where the wind engagement area facing the wind is minimized. Alternatively, the flap can be controlled, as a first step in reefing, to rotate around the first longitudinal axis 111 towards the main wingsail 110 to a folded position, as shown in Fig. 3. In this way, the wind engagement area is effectively reduced.

As is understood, if the wind speed decreases below the threshold value T, the device 150 may control the rotation of the flap 120 to rotate back to an unfolded, propulsive position around the first longitudinal axis 111 of rotation to again increase the wind engagement area of the unit 101 that is subjected to wind. Further, should WS ≤ T, it will typically not be necessary to fold the flap 120.

While only a single wind speed detector 160 is illustrated in Fig. 2, it may be envisaged that the device 150 may be in communicative connection with a plurality of wind speed detectors arranged at different positions of the vessel. The wind propulsion arrangement may be equipped with a wind speed detector 160. The measured wind speed values of the plurality of wind speed detectors may be weighted by the device 150 to form a wind speed reading for controlling the folding as described hereinabove, such as forming an average wind speed value.

With reference to Fig. 2, while the wind speed detector 160 will detect what is commonly referred to as *apparent wind,* i.e. the wind actually experienced by the wind propulsion arrangement 100 and/or the wind engagement unit 101, defined as *true wind* plus motion of the vessel 1 (speed, course, roll, etc.), true wind may alternatively be taken into account for controlling the reefing including the folding of the flap 120 and the tilting of the whole wind engagement unit. In other words, the true wind is the wind that the wind speed detector 160 would experience if the vessel 1 went to a complete stop. Thus, true wind speed and angle can be calculated from the measured apparent wind speed by utilizing information as regards motion of the vessel 1 (mainly course and speed of the vessel 1). Thus, rather than determining whether or not apparent wind speed (AWS) exceeds a threshold value T_{AWS} in step S102, the device 150 may alternatively in step S102 determine whether or not true wind speed (TWS) exceeds a threshold value T_{TWS}. The determining of the threshold value in the step S101 may thus be based on a determined apparent wind speed (AWS) and may comprise filtering the measured and/or calculated apparent wind speed (AWS) with one or more of: time constants, filter algorithms and/or weighing the wind speed from wind data from more than one different position of the wind engagement unit (101). Alternatively, the determining S101 of the threshold value may be based on a measured true wind speed (TWS), and/or calculation based on the true wind speed (TWS) and at least one of: vessel speed, speed increase (when the vessel is turned straight into the wind), maximum vessel speed, maximum vessel speed when the vessel is turned straight into the wind and a true wind angle (TWA) range.

In a further embodiment, assuming that the folding of the flap 120 against the main wingsail 110 does not sufficiently reduce the wind engagement area of the wind engagement unit 101 being subjected to wind, the control device 150 may be configured to control the wind engagement unit in a second step to cause the wind engagement unit 101 to pivot around a horizontal axis of rotation 112 in respect of the base 20 towards the body of the marine vessel to a tilted position. The first step may be based on a first threshold (T1) and/or point in time, and the second step is based on a second threshold (T2) and/or point in time. The first threshold (T1) in windspeed (AWS; TWS) may be lower than the second threshold (T2) in windspeed (AWS; TWS). In this way, the whole wind engagement unit is tilted only when higher wind speed is measured by the detector than required for the folding. Thus, the flexibility of the wind propulsion arrangement can be improved, while high safety level is ensured.

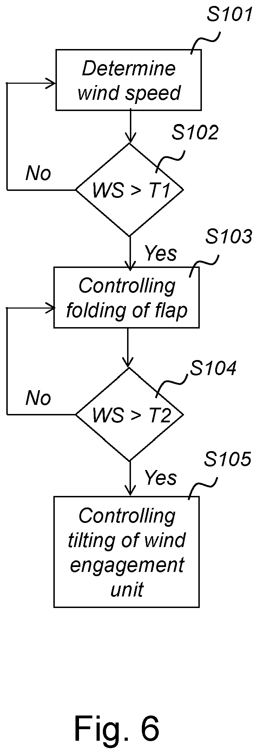

Fig. 6 illustrates this embodiment in a flow chart. In a first step S101, the device 150 determines the wind speed (WS) that the wind propulsion arrangement 101 is subjected to. Similarly, as in the embodiment of Fig. 5, the device 150 is in communicative connection with the wind speed detector 160 which measures the wind speed and supplies the measured wind speed values to the device 150, which is configured to receive the values.

In the step S102, the device 150 determines whether or not the measured wind speed exceeds a first threshold value T1, i.e. WS > T1, where the threshold value is set such that if the measured wind speed exceeds the threshold value T1, the wind speed is considered too high and the wind engagement area of the wind engagement unit 101 should be decreased, and it should thus be reefed. In this example, it is assumed that WS > T1. The wind speed and the threshold may be determined as apparent or true wind speed, or any other appropriate wind speed metric.

To achieve reefing, the device 150 controls in the step S103 the flap 120 of the wind engagement unit 101 to be displaced in relation to the base in step S103 in order to reduce loads on the wind engagement unit 101. The device 150 thus controls the flap 120 to rotate around the first longitudinal axis 111 of the wind engagement unit 101 to a folded position, as a first step in reefing.

In case the measured wind speed exceeds also the second threshold value T2, which is higher than the first threshold T1, the wind speed is considered too high also for the folded flap in the wind engagement unit. In that case the wind engagement area of the wind engagement unit 101 should be further decreased, and it should thus be completely reefed. In this example, in the step S104 it is assumed that WS > T2, and the device 150 controls in the step S105 the wind engagement unit as a second step to pivot around a horizontal axis of rotation 112 in respect of the base 20 towards the body of the marine vessel to a tilted position. As is understood, the tilting in step S105 will greatly reduce the propulsive force as compared to the folding of the flap 120 performed in step S103. As above, the wind speed and the threshold maybe determined as apparent or true wind speed, or any other appropriate wind speed metric.

While a two-step approach is illustrated in Fig. 6, where folding of the flap 120 first is performed in step S103 followed by the tilting of the wind propulsion arrangement 101 in step S105, it may be envisaged that the wind engagement unit 101 is tilted already in step S103, if the measured wind speed greatly exceeds the threshold value T, and that no folding of the flap 120 is performed.

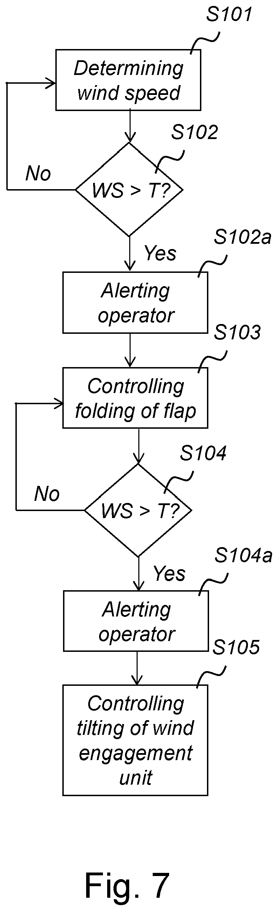

Further in an embodiment, as illustrated in the flowchart of Fig. 7, at any occasion when the wind speed exceeds the threshold value, i.e. WS > T, T1 or T2 in any of the step S102 and S104, the device 150 will provide an alert to an operator of the vessel 1 that the threshold value indeed was exceeded (and that reefing, i.e. folding/tilting, thus automatically will be performed). This may occur audially and/or visually, such as via a human-machine interface (HMI) of the vessel.

While wind speed metrics in the form of apparent wind speed (AWS) and true wind speed (TWS) have been discussed hereinabove, other wind speed metrics may be envisaged.

In an embodiment, both TWS and vessel speed is taken into account, wherein folding - i.e. folding of flap, tilting of the wind engagement unit, or both - is performed if TWS + vessel speed > T, where T is an appropriately selected threshold value. This is the highest wind speed that the wind propulsion arrangement 101 could experience if the vessel 1 turned towards the strongest wind at constant vessel speed.

In an embodiment, both TWS and maximum vessel speed are taken into account, wherein folding is performed if TWS + maximum vessel speed > T, where T is an appropriately selected threshold value. This is the highest wind speed that the wind propulsion arrangement 101 could experience with constant TWS, i.e. if the vessel 1 turned towards the strongest wind and increased the vessel speed to maximum.

In further embodiments, true wind angle (TWA) is taken into account, i.e. the angle from which the wind impinges on the wind propulsion arrangement 101, when considered the vessel has a zero speed. True wind angle may be combined with the above discussed wind speed metrics for determining whether or reefing in the form of flap folding and/or wingsail tilting is to be performed.

In an embodiment, folding or tilting is performed if TWS + vessel speed > T AND the TWA is within a predefined range, such as between appropriately selected angles α and β (e.g. a range possible to reach relatively swiftly with only a small course adjustment). Similarly, TWA range may be added as a condition for folding and/or tilting for the examples given above where vessel speed and maximum vessel speed are taken into account.

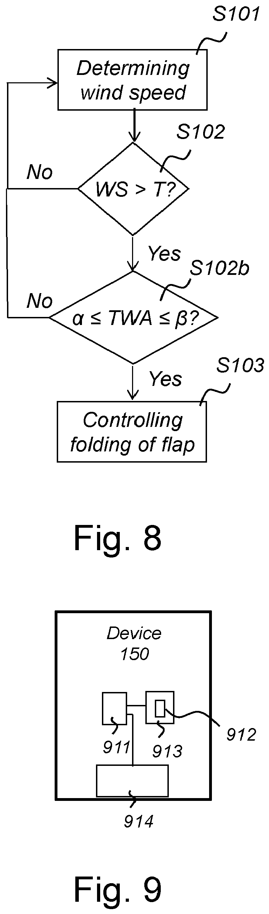

Fig. 8 illustrates one embodiment where true wind angle is taken into account, where in case the wind speed exceeds the threshold value in step S102, i.e. WS > T, the device 150 proceeds to step S102b for determining whether or not α ≤ TWA ≤ β. If so, reefing is performed in step S103.

In an embodiment, based on the measured TWS, the device 150 will compute which states (e.g. courses and vessel speeds) that will result in AWS > T. The device 150 will then estimate (e.g. based on simulation or actual vessel properties) the time it takes for the vessel 1 to reach such a state. Based on this estimation, the control device may alert the crew to avoid those configurations, or fold and/or tilt before changing course and speed of the vessel accordingly.

Again, with reference to Fig. 1, while a designated wind speed detector 160 may be utilized in some embodiments to measure wind speed, other sensors or detectors may be used to measure other properties, such as loads, aerodynamic forces, moments and to provide estimates on the vessel, etc. For instance, as an alternative or in addition to using the wind speed detector, a force sensor or a torque sensor may be arranged to measure the force/torque acting on e.g. the wind engagement unit 101, the flap 102 or the base 20, wherein folding/tilting is performed if the measured force/exceeds an appropriate threshold force/torque value.

Fig. 9 illustrates a device 150 configured to control reefing of a wind engagement unit of a vessel according to an embodiment, where the steps of the method performed by the device 150 in practice are performed by a processing unit 911 embodied in the form of one or more microprocessors arranged to execute a computer program 912 downloaded to a storage medium 913 associated with the microprocessor, such as a Random Access Memory (RAM), a Flash memory or a hard disk drive. The processing unit 911 is arranged to cause the device 150 to carry out the method according to embodiments when the appropriate computer program 912 comprising computer-executable instructions is downloaded to the storage medium 913 and executed by the processing unit 911. The storage medium 913 may also be a computer program product comprising the computer program 912. Alternatively, the computer program 912 may be transferred to the storage medium 913 by means of a suitable computer program product, such as a Digital Versatile Disc (DVD) or a memory stick. As a further alternative, the computer program 912 may be downloaded to the storage medium 913 over a network. The processing unit 911 may alternatively be embodied in the form of a digital signal processor (DSP), an application specific integrated circuit (ASIC), a field-programmable gate array (FPGA), a complex programmable logic device (CPLD), etc. The device 150 further comprises a communication interface 914 (wired and/or wireless) over which the device 150 is configured to transmit and receive data.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method of a device (150) of controlling reefing of a wind engagement unit (101) of a wind propulsion arrangement (100) of a vessel (1), the wind propulsion arrangement (100) comprising:
- the wind engagement unit comprising at least one movable portion (120), and
- a base (20) connected to the wind engagement unit (101) and to a body of the marine vessel, and wherein
the method comprises:
determining (S101) wind speed (TWS; AWS) that is experienced by the wind engagement unit (101),
determining (S102) whether or not the wind speed (WS; TWS; AWS) exceeds one or more threshold values (T) determined for the wind engagement unit (101); and if so:
controlling (S103, S101) the at least one movable portion (120) of the wind engagement unit (101) to be displaced in relation to the base.

2. The method according to claim 1, wherein the step (S101) additionally comprises determining force and/or torque acting on the wind engagement unit (101), and the step (S102) additionally comprises determining whether or not the force and/or torque exceeds one or more threshold values determined for the wind engagement unit and if so, performing the controlling step (S103, S105).

3. The method according to any one of the preceding claims, wherein the wind engagement unit comprises a main wingsail (110) and a flap (120), which is rotatable around a first longitudinal axis (111) of rotation, and wherein in the method the step of controlling (S103) of the at least one movable portion of the wind engagement unit (101) comprises:
controlling (S103) the flap (120) to rotate around the first longitudinal axis (111) of the wind engagement unit (101).

4. The method of claim 3, wherein the controlling (S103) of the flap (120) comprises in a first step:
causing the flap (120) to rotate around the first longitudinal axis (111) towards the main wingsail (110) to a folded position.

5. The method of any one of the preceding claims, wherein the controlling (S101) of the at least one movable portion (120) of the wind engagement unit (101) to be displaced comprises in a second step:
causing the wind engagement unit (101) to pivot around a horizontal axis of rotation (112) in respect of the base (20) towards the body of the marine vessel to a tilted position.

6. The method of any one of claims 4 or 5, wherein the first step is based on a first threshold (T1) and/or point in time, and the second step is based on a second threshold (T2) and/or point in time.

7. The method of claim 6, wherein the first threshold (T1) in windspeed (AWS; TWS) and/or force and/or torque is lower than the second threshold (T2) in windspeed (AWS; TWS) and/or force and/or torque.

8. The method according to any one of the preceding claims, wherein the determining of the threshold value (T; T1; T2) is based on a determined apparent wind speed (AWS) and comprises filtering the measured and/or calculated apparent wind speed (AWS) with one or more of: time constants, filter algorithms and/or weighing the wind speed from wind data from more than one different positions of the wind engagement unit (101).

9. The method according to any one of the preceding claims, wherein the determining (S101) of the threshold value (T; T1; T2) is based on a measured true wind speed (TWS), and/or calculation based on the true wind speed (TWS) and at least one of: vessel speed, speed increase, maximum vessel speed, maximum vessel speed when the vessel is turned straight into the wind and true wind angle (TWA) range.

10. The method of claim 9, wherein the controlling (S103, S105) the at least one movable portion (120) of the wind engagement unit (101) is performed only if it is determined (S102b) that a true wind angle of the wind engagement unit (101) is within a pre-determined range.

11. The method of any one of the preceding claims, further comprising:
alerting (S102a, S104a) an operator of the vessel (100) that the wind speed exceeds the threshold value.

12. A computer program (112) comprising computer-executable instructions for causing a device (150) to perform steps recited in any one of claims 1-11 when the computer-executable instructions are executed on a processing unit (111) included in the device (150).

13. A computer program product comprising a computer readable medium (113), the computer readable medium having the computer program (112) according to claim 12 embodied thereon.

14. A controller device (100) configured to control reefing of a wind engagement unit (101) of a wind propulsion arrangement (100) of a vessel (19), the wind propulsion arrangement (100) comprising:
- the wind engagement unit (101) comprising at least one movable portion (120), and
- a base (20) connected to the wind engagement unit (101) and to a body of the marine vessel, wherein
the controller device comprises a processing unit (111) and a memory (113), said memory containing instructions (112) executable by said processing unit (111), whereby the controller device (100) is operative to:
acquire wind speed data from the wind propulsion arrangement (100) associated with the wind speed (TWS; AWS) that is experienced by the wind engagement unit (101);
determine, based on the acquired wind speed data, whether or not the wind speed (WS; TWS; AWS) exceeds one or more threshold values (T) determined for the wind engagement unit (101); and if so
control (S103, S101) the at least one movable portion (120) of the wind engagement unit (101) to be displaced in relation to the base.

15. The controller device (100) of claim 14, wherein the wind engagement unit (101) comprises a main wingsail (110) and a flap (120), which is rotatable around a first longitudinal axis (111) of rotation, and wherein in the controller device is further being operative to control (S103) the flap (120) to rotate around the first longitudinal axis (111) of the wind engagement unit (101).

16. The controller device (100) of claim 14 or 15, being further operative to control (S103; s105): the flap (120) in a first step to rotate around the first longitudinal axis (111) towards the main wingsail (110) to a folded position and/or in a second step to pivot around a horizontal axis of rotation (112) in respect of the base (20) towards the body of the marine vessel to a tilted position.

17. The controller device of claim 16, wherein the first step is based on a first threshold (T1) and/or point in time, and the second step is based on a second threshold (T2) and/or point in time, and wherein the first threshold (T1) in windspeed (AWS; TWS) and/or force and/or torque is lower than the second threshold (T2) in windspeed (AWS; TWS) and/or force and/or torque.

18. The controller device according to any one of the preceding claims 14 to 17, the controller device being operative to determine the threshold value (T; T1; T2) based on a determined apparent wind speed (AWS) and filter the measured and/or calculated apparent wind speed (AWS) with one or more of: time constants, filter algorithms and/or weighing the wind speed from wind data from more than one different positions of the wind engagement unit (101).

19. The controller device according to any one of the preceding claims 14 to 18, the controller device being operative to determine (S101) the threshold value (T; T1; T2) based on a measured true wind speed (TWS), and/or calculation based on the true wind speed (TWS) and at least one of: vessel speed, speed increase, maximum vessel speed, maximum vessel speed when the vessel is turned straight into the wind and true wind angle (TWA) range, and to control (S103, S105) the at least one movable portion (120) of the wind engagement unit (101) only if it is determined (S102b) that a true wind angle of the wind engagement unit (101) is within a pre-determined range.

20. The controller device according to any one of the preceding claims 14 to 19, the controller device being operative to alert (S102a, S104a) an operator of the vessel (100) that the wind speed exceeds the threshold value.
